# EUROPÄISCHE PATENTSCHRIFT

(11) **EP 0 590 468 B1**
(45) Veröffentlichungstag und Bekanntmachung des Hinweises auf die Patenterteilung: **26.02.1997**
(21) Anmeldenummer: 93115131.0
(22) Anmeldetag: 21.09.1993
(51) Int. Cl.: C08F 2/18

(54) **Verfahren zur Verringerung des Restmonomerengehaltes bei der Herstellung von Perlpolymerisaten**
Method of reducing residual monomers in the preparation of bead polymers
Procédé de réduction des monomères résiduel dans la préparation de polymères en forme de perles

(30) Priorität: 25.09.1992 DE 4232194
(43) Veröffentlichungstag der Anmeldung: 06.04.1994
(73) Patentinhaber: Röhm GmbH, 64293 Darmstadt (DE)
(72) Erfinder: Rauch, Hubert, D-64331 Weiterstadt 1 (DE); Arndt, Peter Joseph, Dr., D-64342 Seeheim-Jugenheim (DE); Brümmer, Heinz-Dieter, Dr., D-64342 Seeheim-Jugenheim (DE); Hörtinger, Bernd, D-64342 Seeheim-Jugenheim (DE)

(56) Entgegenhaltungen:
- EP-A- 0 055 507
- DE-A- 2 454 789

## Beschreibung

### Gebiet der Erfindung

Die Erfindung betrifft die Herstellung von Perlpolymerisaten durch radikalinduzierte Polymerisation von Vinylmonomeren mit verbesserter Endpolymerisation.

### Stand der Technik

Perlpolymerisate verschiedener Polymerer, wie sie bei der Perlpolymerisation der entsprechenden Monomeren, einem Spezialfall der Suspensionspolymerisation, anfallen, haben in der Technik mannigfache Verwendung. Polystyrolperlen und Perlpolymerisate von Polymethylmethacrylat und weiteren Polymerisaten auf Methacrylat-Basis werden zur Herstellung von Spritzgußteilen und anderen Formteilen eingesetzt. Perlpolymerisate aus Methacrylatpolymeren finden Anwendung u.a. auch in der Dentaltechnik, als Lackrohstoffe, als Ionenaustauscher.

Die Perlpolymerisation, auch als Suspensionspolymerisation bezeichnet, ist ein Polymerisationsverfahren, bei dem das Monomere, in dem die zur Polymerisation notwendigen Hilfsstoffe wie Initiatoren und Regler gelöst sind, als disperse Phase durch Einwirkung mechanischer Kräfte, insbesondere durch Rührung in einem Nichtlösemittel, der kontinuierlichen Phase, in kugeliger Form verteilt sind. Man verwendet als kontinuierliche Phase, von wenigen Spezialfällen abgesehen, Wasser.

Zum Unterschied von der Emulsionspolymerisation sind die bei der Perlpolymerisation eingesetzten Polymerisationsinitiatoren monomerenlöslich und wasserunlöslich. Verwendet werden als Starter vor allem Dibenzoylperoxid, Dilauroylperoxid und Azoverbindungen. Zur Erreichung einer möglichst vollständigen Polymerisation können, wenn gegen Ende der Umsetzung die Temperatur gesteigert wird, Radikalbildner mit hohen Zerfallstemperaturen Zugesetzt werden. Die Initiierung nach Art einer Redoxpolymerisation ist bei der Perlpolymerisation wenig üblich und führt zu kleinteiligem, emulsionsartigem Polymerisat. (Rauch-Puntigam/Völker, Acryl- und Methacrylverbindungen, Springer-Verlag, 1967, 208 - 211; Ullmanns Encyklopädie der technischen Chemie, Verlag Chemie, 4. Auflage, Band 19, 125 - 127). Nach der DE-A 24 54 789 werden so durch Zusatz von Fe²⁺-, Ti³⁺-, oder Co²⁺-Ionen während des Polymerisationszulaufs annähernd kugelförmige Polymerperlen mit einer durchschnittlichen Teilchengröße von weniger als 20 µ bei der Mischpolymerisation einer ungesättigen Carbonsäure und eines Vernetzungsmittels erhalten.

Ein Problem bei der Herstellung von Suspensionspolymerisaten ist, daß abhängig von der Monomerenart bzw. den Comonomeren im Gemisch und den gewählten und optimalen Polymerisationsbedingungen, doch noch Monomerreste übrigbleiben, die trotz ihrer relativ geringen Menge, d.h. ca. 1 bis 10 000 ppm bezogen auf das Polymerisat, Geruchsprobleme bei der Verwendung des Polymerisates oder/und Kontaminationsprobleme bei der Aufarbeitung der wäßrigen Phase verursachen. In der DE-OS 36 31 070 wird vorgeschlagen, nach der Durchführung der Suspensionspolymerisation eine Wasserdampfdestillation anzuschließen, um geruchsbildende und toxische Stoffe aus der Polymersuspension zu entfernen.

### Aufgabe und Lösung

Dieser Vorschlag kann nicht als Lösung zur Entsorgung von Restmonomeren angesehen werden, da diese hierbei nur auf eine andere Ebene verlagert wird.

Die Lösung der Aufgabe, Verringerung des Restmonomerengehalts bei der Perlpolymerisation, besteht nach der Erfindung darin, an die nach Verfahren des Standes der Technik durchgeführte Perlpolymerisation, eine Endpolymerisation mittels wasserlöslicher Redoxinitiatoren anzuschließen. Durch diese Maßnahme lassen sich die Restmonomerengehalte in der Polymersuspension überraschenderweise unter deren Nachweisgrenzen absenken.

### Die Erfindung betrifft ein

Verfahren zur Herstellung von Perlpolymerisaten durch Suspensions-Perlpolymerisation von Vinylmonomeren in Wasser als Suspensionsmedium,
dadurch gekennzeichnet,
daß die Polymerisation in Gegenwart der für das Polymerisationsverfahren bekannten und notwendigen Zusätze, in zwei aufeinanderfolgenden Stufen durchgeführt wird, wobei in
**Stufe 1** mit üblichem, monomerlöslichem Polymerisationsinitiator bei Temperaturen von 70 Grad C und darüber und in
**Stufe 2** durch Zugabe eines wasserlöslichen Redoxinitiatorsystems bei Temperaturen unter 70 Grad C polymerisiert wird.

Als wasserlösliche Redoxinitiatorsysteme können solche eingesetzt werden, deren Komponenten alle anorganische Verbindungen sind oder solche, deren Komponenten alle organische Verbindungen sind. Auch Systeme mit anorganischen und organischen Komponenten sind erfindungsgemäß einsetzbar.
Das Verfahren hat vor allem Bedeutung für die Herstellung von Perlpolymerisaten, die überwiegend aus Estern der Acryl- bzw. der Methacrylsäure bestehen, und insbesondere für die Endpolymerisation von, gegenüber den Alkylestern der Acryl- bzw. Methacrylsäure, relativ hydrophileren Comonomeren.

### Durchführung der Erfindung

Die kontinuierliche Phase ist im allgemeinen Wasser. Als zur Polymerisation geeignete Monomere kommen daher primär schwerlösliche bis wasserunlösliche, radikalisch polymerisierbare Monomere in Frage. Dies trifft z.B. für Styrol und substituierte Styrole, Vinylester von Carbonsäuren, wie Vinylacetat, Ester der Acryl- und der Methacrylsäure, daneben für Vinylchlorid, Vinylidenchlorid, N-Vinylcarbazol zu.
Das Verhältnis von wäßriger zur Monomerenphase beträgt meist 1 : 1 bis 4 : 1, vor allem 1,5 - 2,0 :1.

Das wichtigste Monomere für Acrylharzperlen ist der Methacrylsäuremethylester. Werden andere Alkylester der Methacrylsäure oder Acrylsäure polymerisiert, so erhält man - je nach Erweichungspunkt - weiche bis klebrige Perlen, weshalb man sie oft nur als Comonomere neben anderen Derivaten der Acryl- und/oder Methacrylsäure, wie Säuren, Amiden oder Nitrilen verwendet.
Als hydrophobe Comonomere zum Methacrylsäuremethylester kommen insbesondere die Ester der Methacrylsäure mit C₂ bis C₂₄-Alkoholen und die Ester der Acrylsäure mit C₁ bis C₂₄-Alkoholen in Betracht. Technisch häufig verwendete Comonomere sind beispielsweise Ethylacrylat, 2-Ethylhexylacrylat, iso- und n-Butylmethacrylat.
Weiter können die Acrylharzperlpolymerisate noch mit weiteren Acryl- oder Methacryl-Monomeren, wie z.B. Phenylester, Benzylester und gegebenenfalls substituierten Amiden der Acryl- und/oder der Methacrylsäure, Methacrylnitril und/oder Acrylnitril, ferner mit Styrol und dessen Derivaten, sowie mit Vinylcarbonsäureestern, wie Vinylacetat, und gegebenenfalls mit weiteren, radikalisch polymerisierbaren Vinylmonomeren aufgebaut sein.

Als hydrophilierende Komponenten kommen beim Perlenaufbau z.B. hydroxylgruppenhaltige Monomere in Betracht. Genannt seien z.B. Hydroxyalkylester der Acryl- bzw. der Methacrylsäure, vor allem die β-Hydroxyethyl- bzw. -propylester, wie β-Hydroxyethylmethacrylat oder β-Hydroxy-propylacrylat, aber auch die ω-Hydroxyalkylester dieser Säuren, wie z.B. 4-Hydroxybutylacrylat.

Daneben kann das Perlpolymerisat noch mit vernetzenden Monomeren, d.h. Verbindungen mit mindestens zwei reaktiven Gruppen im Molekül, wobei als reaktive Gruppen insbesondere die Vinyl-, Vinyliden-, die Amidmethylol-, Amidmethylolethergruppen in Frage kommen, aufgebaut sein. Genannt seien dazu die Acryl- und Methacrylsäureester von mehrwertigen Alkohlen, wie Glykoldi(meth)acrylat, 1,3- und 1,4-Butandioldi(meth)acrylat, Methylenbis(meth)acrylamid, ferner Allylverbindungen wie Allylmethacrylat, Allylmethacrylamid, Triallylcyanurat u.ä. Diese Monomeren sind dann in der Regel in geringen Mengen, beispielsweise in 0,05 bis 2 Gew.-%, bezogen auf die Gesamtheit der Monomeren, in dem Perlpolymerisat eingebaut.

Mit diesen genannten Monomeren lassen sich in bekannter Weise mit den dazu üblichen, in der Monomerphase löslichen Initiatoren, wie z.B. Dibenzoylperoxid, Dilauroylperoxid, Azoverbindungen, bei Temperaturen von 70 Grad C und darüber, vor allem über 80 Grad C, die entsprechenden Suspensions-Perlpolymerisate herstellen.

Dabei können Monomere in zwar geringen, aber in bei der Aufarbeitung erheblich störenden Mengen, bei der Polymerisation nicht eingebaut werden, so daß sie als niedrigsiedende Verbindungen im Reaktionsansatz vor allem in der Wasserphase verbleiben. Diese können für lästige Geruchsprobleme im Reaktionsprodukt oder insbesondere auch bei der Aufarbeitung der Wasserphase für Emissionsprobleme des Abwassers oder der Abluft sorgen.

Gegebenenfalls abhängig von den Copolymerisationsparametern und/oder von den Wasserlöslichkeiten der einzelnen Monomeren, die meist als Gemische zur Herstellung der verschiedenen Perlpolymerisationsprodukte eingesetzt werden, finden sich Restmonomergehalte in der wäßrigen Phase von < 1 ppm bis zu einigen Tausend ppm. Während Methylmethacrylat unter den üblichen Bedingungen der Perlpolymerisation praktisch vollständig polymerisiert wird - Restmonomergehalte < 1 ppm - sind bei Ethylacrylat z.B. als Comonomeren von Methylmethacrylat noch ca. 100 ppm Restmonomeres in der Wasserphase feststellbar. Bei der Herstellung von Perlpolymerisaten mit β-Hydroxypropylacrylat als Comonomerem, enthält die Wasserphase beispielsweise noch etwa 2000 bis 4000 ppm dieses Monomeren.

Erfindungsgemäß wird nach der Perlpolymerisation der Reaktionsmischung ein wasserlösliches Redoxinitiatorsystem bei Temperaturen unter 80 Grad C zugesetzt und bei Temperaturen unter 70 Grad C, vor allem bei Temperaturen von 30 bis 70 Grad C, insbesondere bei 40 bis 60 Grad C, noch einige Stunden, vor allem etwa 2 bis 24 Stunden weiterpolymerisiert.

Die erfindungsgemäß in zweiter Stufe einzusetzenden Redoxinitiatorsysteme sind Kombinationen aus oxidierenden und reduzierenden Verbindungen und als solche zur Initiierung von radikalischen Polymerisationen bekannt.

Wasserlösliche Redoxinitiatorsysteme, mit denen die Restmonomerengehalte der Perlpolymerisationssysteme drastisch, z.T. unter die Nachweisgrenze der jeweiligen Monomeren abgesenkt werden können, enthalten vorzugsweise Übergangsmetalle, wie vor allem Fe²⁺-Verbindungen, gegebenenfalls auch Co²⁺-Verbindungen, neben den wasserlöslichen Perverbindungen, wie z.B. Wasserstoffperoxid oder Ammoniumperoxidisulfat (APS) und den Reduktionsmitteln, wie insbesondere Disulfit oder Dithionit oder Sulfit oder Thiosulfat, die vor allem in Form ihrer Natrium-, Kalium- oder Ammoniumsalze eingesetzt werden. Allen Redoxinitiatoren ist gemeinsam, daß bei der Reaktion ihrer Einzelkomponenten Radikale gebildet werden, die die Polymerisation der Monomeren, in dem erfindungsgemäßen Verfahren der nicht mehr perlpolymerisierenden Restmonomeren, zu Makromolekülen, praktisch bis zum vollständigen Umsatz initiieren.

Das Verfahren zur erfindungsgemäßen Endpolymerisation von Restmonomeren bei der Herstellung von Perlpolymerisaten, insbesondere von Acrylharzperlen, wird vorzugsweise mit, d.h. in der Perlsuspension durchgeführt, wodurch das sich bildende Restpolymerisat möglicherweise auf den Perlen gebildet oder niedergeschlagen wird, aber jedenfalls mit dem Perlpolymerisat von der Wasserphase abgetrennt wird.

Die zweite Polymerisationsstufe kann auch nach vorhergehender Perlpolymerisatabtrennung in dem perlfreien Wasser durchgeführt werden, wodurch ein praktisch Monomeren-freies Wasser, das gegebenenfalls zur weiteren Reinigung noch weiter behandelt werden muß, erhalten wird.

Für die Initiierung der Monomeren-Endpolymerisation werden das wasserlösliche Oxidationsmittel (Perverbindung) und das wasserlösliche Reduktionsmittel des Redoxinitiatorsystems in Mengen von je etwa 0,03 bis 0,3 Gew.-%, vorzugsweise 0,05 bis 0,2 Gew.-% bezogen auf die Wasserphase eingesetzt. Die vorteilhaft mitverwendete Übergangsmetallverbindung wird in Mengen von etwa 0,0005 bis 0,005 Gew.-% bezogen auf die Perlsuspension eingesetzt. Ein sehr effektives Redoxinitiatorsystem in dem erfindungsgemäßen Verfahren enthält die Komponenten Ammoniumpersulfat, Natriumdisulfit und Eisen-II-Sulfat und diese vorwiegend in den Gewichtsverhältnissen 1 : 1-2 : 0,05 - 0,02. Wie aus den Beispielen hervorgeht, lassen sich mit Redoxinitiatorsystemen, die organische Redox-Komponenten enthalten, wie z.B. das System tert-Butylhydroperoxid - Hydroxymethansulfinsaures-Natrium, die Restmonomergehalte in einer der Stufe der Perlpolymerisation nachgeschalteten Polymerisationsstufe, ebenfalls drastisch senken.

Die nachfolgenden Beispiele dienen der Erläuterung der Erfindung. Daraus sind zu ersehen die Restmonomerengehalte der Perlpolymerisationsansätze und die Effektivitäten von Redoxinitiatorsystemen bei der Polymerisation der Restmonomeren in der zweiten Polymerisationsstufe. Diese wird vorteilhaft mit der Perlsuspension durchgeführt, kann aber auch, wie ebenfalls beispielhaft gezeigt, mit der perlfreien Wasserphase erfolgen.

### BEISPIELE

### Beispiel 1

Eine in bekannter Weise durch Perlpolymerisation der Monomeren Isobutylmethacrylat (M1), 2-Ethylhexylacrylat (M2) und 2-Hydroxypropylacrylat (M3) hergestellte Perlsuspension (ca. 39 % Feststoff), enthält nach Polymerisationsende in der Wasserphase folgende Restmonomerengehalte (Remo):

| | |
|---|---|
| 0,6 ppm | Isobutylmethacrylat |
| < 0,5 ppm | 2-Ethylhexylacrylat und |
| 3 800,0 ppm | 2-Hydroxpropylacrylat |

Nach Zugabe von

| | |
|---|---|
| 24,5 g | Ammoniumperoxidisulfat (APS) |
| 34,3 g | Natriumdisulfit und |
| 0,245 g | Eisen-II-Sulfat zu |

40 kg o.g. Perlsuspension bei 60 Grad C und 2- bzw. 24-stündiger Endpolymerisation während der Abkühlzeit des Ansatzes zwischen 60 und 30 Grad C und anschließender Polymerisatabtrennung werden in der Wasserphase die in Tabelle 1 aufgeführten Restmonomerenwerte erhalten.

### Beispiel 2

Man verfährt wie in Beispiel 1 mit dem Unterschied, daß bei 60 Grad C

| | |
|---|---|
| 12,3 g | Ammoniumperoxidisulfat |
| 18,4 g | Natriumdisulfit und |
| 0,245 g | Eisen-II-Sulfat zugegeben werden. |

Restmonomerengehalte in Tabelle 1.

### Beispiel 3

Man verfährt wie in Beispiel 1 mit dem Unterschied, daß bei 60 Grad C
7,4 g tert.-Butylhydroperoxid und anschließend innerhalb von 15 Minuten
7,4 g Natriumhydroxymethansulfinat-dihydrat, gelöst in 1 1 Wasser, zugegeben werden.

Restmonomerengehalte in Tabelle 1.

### Beispiel 4

Man verfährt wie in Beispiel 1 mit dem Unterschied, daß bei 60 Grad C
2,5 g tert.-Butylhydroperoxid und anschließend innerhalb von 15 Minuten
2,5 g Natriumhydroxymethansulfinat-dihydrat, gelöst in 1 1 Wasser, zugegeben werden.

Restmonomerengehalte in Tabelle 1.

### Beispiel 5

Eine analog Beispiel 2 hergestellte Perlsuspension enthält als Restmonomere

| | |
|---|---|
| < 1 ppm | Isobutylmethacrylat |
| < 1 ppm | 2-Ethylhexylacrylat und |
| 1 900 ppm | 2-Hydroxypropylacrylat. |

Nach der Polymerisatabtrennung werden durch Zugabe von

| | |
|---|---|
| 28,8 g | Ammoniumperoxidisulfat, |
| 40,3 g | Natriumdisulfit und |
| 0,29 g | Eisen-II-Sulfat zu |

28,8 kg Filtrat (perlfreie Wasserphase) bei Raumtemperatur endpolymerisiert.

Restmonomerengehalt nach 24 Stunden Reaktionszeit siehe Tabelle 1.

### Beispiel 6

Eine analog Beispiel 1 hergestellte Perlsuspension enthält nach Polymerisationsende in der Wasserphase als Restmonomere

| | |
|---|---|
| 845 ppm | Isobutylmethacrylat |
| 7 ppm | 2-Ethylhexylacrylat und |
| 3 274 ppm | 2-Hydroxypropylacrylat. |

Nach Zugabe von

| | |
|---|---|
| 3,4 kg | Ammoniumperoxidisulfat, |
| 4,8 kg | Natriumdisulfit und |
| 34,0 g | Eisen-II-Sulfat zu |

5 160 kg o.g. Perlsuspension bei 60 Grad C, 4-stündiger Endpolymerisation während der Abkühlzeit des Ansatzes zwischen 60 Grad C und 30 Grad c und anschließender Polymerisationsabtrennung werden in der Wasserphase die in Tabelle 1 aufgeführten Restomonomerenwerte erhalten.

### Beispiel 7

Eine in bekannter Weise durch Perlpolymerisation der Monomeren Methylmethacrylat (M4) und Ethylacrylat (M5) hergestellte Perlsuspension (ca. 40 % Feststoff), enthält nach Polymerisationsende in der Wasserphase als Restmonomere

| | |
|---|---|
| < 1 ppm | Methylmethacrylat und |
| 90 ppm | Ethylacrylat. |

Nach der Polymerisationsabtrennung werden durch Zugabe von

| | |
|---|---|
| 60,0 g | Ammoniumperoxidisulfat, |
| 84,0 g | Natriumdisulfit und |
| 0,6 g | Eisen-II-Sulfat zu |

60 kg Filtrat (perlfreie Wasserphase) bei Raumtemperatur endpolymerisiert.

Restmonomerengehalt nach 24 Stunden Reaktionszeit siehe Tabelle 2.

### Beispiel 8

Eine analog Beispiel 7 hergestellte Perlsuspension enthält nach Polymerisationsende in der Wasserphase als Restomonomere

| | |
|---|---|
| 10 ppm | Methylmethacrylat und |
| 530 ppm | Ethylacrylat. |

Nach Zugabe von

| | |
|---|---|
| 2,9 kg | Ammoniumperoxidisulfat, |
| 4,1 kg | Natriumdisulfit und |
| 29,0 kg | Eisen-II-Sulfat zu |

4 960 kg o.g. Perlsuspension bei 55 Grad C, 5-stündiger Endpolymerisation während der Abkühlzeit des Ansatzes zwischen 55 und 29 Grad C und anschließender Polymerisatabtrennung werden in der Wasserphase die in Tabelle 2 aufgeführten Restmonomerenwerte erhalten.

### Beispiel 9

Eine analog Beispiel 7 hergestellte Perlsuspension enthält nach Polymerisationsende in der Wasserphase als Restomonomere

| | |
|---|---|
| 20 ppm | Methylmethacrylat und |
| 520 ppm | Ethylacrylat |

Nach Zugabe von

| | |
|---|---|
| 1,45 kg | Ammoniumperoxidisulfat, |
| 2,05 kg | Natriumdisulfit und |
| 29,00 g | Eisen-II-Sulfat zu |

4 960 kg o.g. Perlsuspension bei 55 Grad C, 2-stündiger Endpolymerisation während der Abkühlzeit des Ansatzes zwischen 55 und 32 Grad C und anschließender Polymerisatabtrennung werden in der Wasserphase die in Tabelle 2 aufgeführten Restmonomerenwerte erhalten.

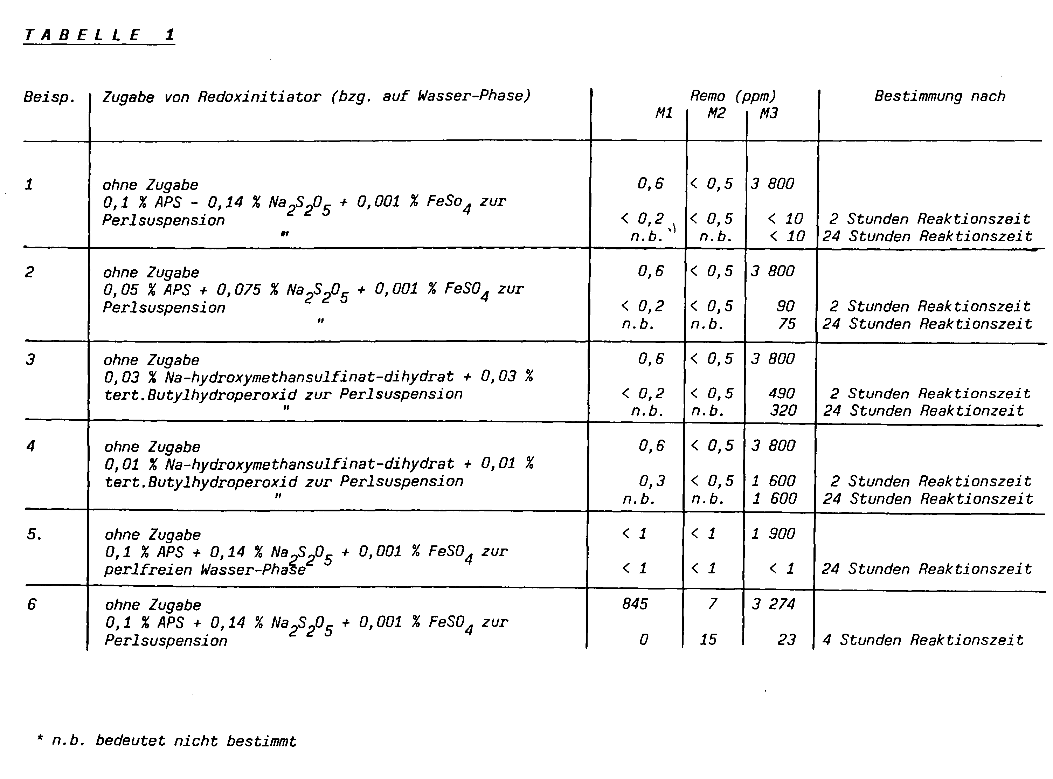

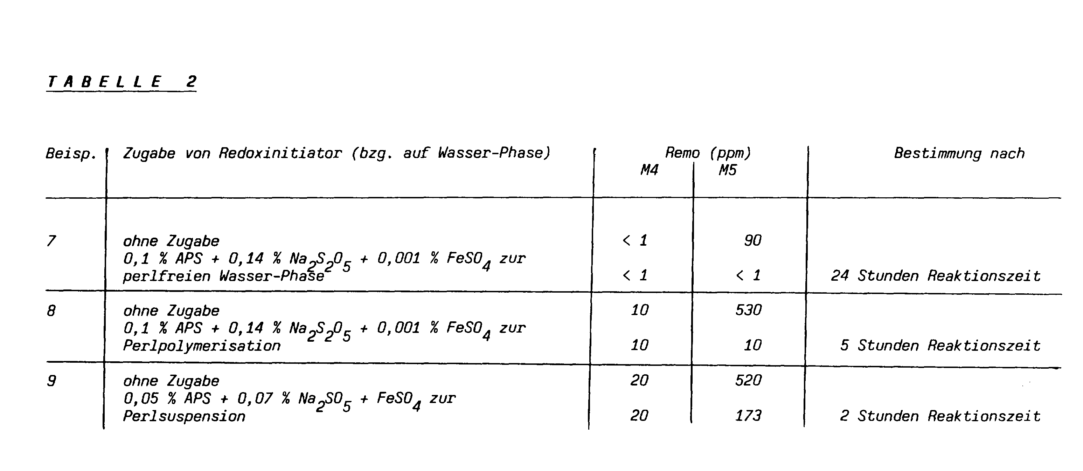

## Patentansprüche

1. Verfahren zur Herstellung von Perlpolymerisaten durch Suspensions-Perlpolymerisation von Vinylmonomeren in Wasser als Suspensionsmedium,
dadurch gekennzeichnet,
daß die Polymerisation in Gegenwart der für das Polymerisationsverfahren bekannten und notwendigen Zusätze, in zwei aufeinanderfolgenden Stufen durchgeführt wird, wobei in
**Stufe 1** mit üblichen, monomerlöslichen Polymerisationsinitiatoren bei Temperaturen von 70 Grad C und darüber und in
**Stufe 2** durch Zugabe eines wasserlöslichen Redoxinitiatorsystems bei Temperaturen unter 70 Grad C polymerisiert wird.

2. Verfahren nach Anspruch 1, dadurch gekennzeichnet, daß das Redoxinitiatorsystem der Stufe 2 aus anorganischen Komponenten aufgebaut ist.

3. Verfahren nach den Ansprüchen 1 und 2, dadurch gekennzeichnet, daß das Redoxinitiatorsystem Übergangsmetallverbindungen enthält.

4. Verfahren nach den Ansprüchen 1 bis 3, dadurch gekennzeichnet, daß das Redoxinitiatorsystem aus den Komponenten Ammoniumpersulfat, Natriumdisulfit und Eisen-II-Sulfat besteht.

5. Verfahren nach Anspruch 1, dadurch gekennzeichnet, daß das Redoxinitiatorsystem aus organischen Komponenten aufgebaut ist.

6. Verfahren nach den Ansprüchen 1 und 5, dadurch gekennzeichnet, daß das Redoxinitiatorsystem aus den Komponenten tert-Butylhydroperoxid und Hydroxymethansulfinsaures-Natrium besteht.

7. Verfahren nach den Ansprüchen 1 bis 6, dadurch gekennzeichnet, daß die Perlpolymerisation überwiegend mit Acryl- und Methacrylverbindungen als Vinylmonomeren durchgeführt wird.

## Claims

1. A process for preparing bead polymers by suspension-bead polymerisation of vinyl monomers in water as a suspension medium, characterised in that the polymerisation is carried out in the presence of known additives required for the polymerisation process, in two successive stages, wherein in Stage 1 conventional, monomer-soluble polymerisation initiators are used at temperatures of 70°C and above, and in Stage 2 a watersoluble redox initiator system is added at temperatures below 70°C.

2. A process according to Claim 1, characterised in that the redox initiator system of Stage 2 is based on inorganic components.

3. A process according to Claims 1 and 2, characterised in that the redox initiator system comprises transition metal compounds.

4. A process according to Claims 1 to 3, characterised in that the redox initiator system comprises the components ammonium persulphate, sodium disulphite and iron II sulphate.

5. A process according to Claim 1, characterised in that the redox initiator system is based on organic components.

6. A process according to Claims 1 and 5, characterised in that the redox initiator system comprises the components tert-butylhydroperoxide and hydroxymethanesulphinic acid-sodium salt.

7. A process according to Claims 1 to 6, characterised in that the bead polymerisation is mainly carried out using acrylic and methacrylic compounds as the vinyl monomers.

## Revendications

1. Procédé de préparation de polymères en perles par polymérisation en suspension de monomères vinyliques dans de l'eau servant de milieu de suspension,
caractérisé en ce que la polymérisation est conduite en présence des additifs connus et nécessaires pour le procédé de polymérisation, en deux étapes successives, la polymérisation étant effectuée, dans l'étape 1, avec des amorceurs de polymérisation usuels, solubles dans les monomères, à des températures de 70°C et au-delà et, dans l'étape 2, par addition d'un système amorceur redox soluble dans l'eau, à des températures inférieures à 70°C.

2. Procédé selon la revendication 1, caractérisé en ce que le système amorceur redox de l'étape 2 est formé de composants inorganiques.

3. Procédé selon la revendication 1 ou 2, caractérisé en ce que le système amorceur redox contient des composés de métaux de transition.

4. Procédé selon l'une quelconque des revendications 1 à 3, caractérisé en ce que le système amorceur redox est formé des composants persulfate d'ammonium, disulfite de sodium et sulfate de fer (II).

5. Procédé selon la revendication 1, caractérisé en ce que le système amorceur redox est formé de composants organiques.

6. Procédé selon les revendications 1 et 5, caractérisé en ce que le système amorceur redox est formé des composants hydroperoxyde de tert.-butyle et hydroxyméthanesulfinate de sodium.

7. Procédé selon l'une quelconque des revendications 1 à 6, caractérisé en ce que la polymérisation en perles est effectuée principalement avec des composés acryliques et méthacryliques en tant que monomères vinyliques.
